# EUROPEAN PATENT APPLICATION

(11) **EP 4 261 445 A1**
(43) Date of publication of application: **18.10.2023**
(21) Application number: 22020168.5
(22) Date of filing: 12.04.2022
(51) Int. Cl.: F16L 3/10

(54) **COLLAR FOR PRODUCTS WITH A LONG AND SLENDER SHAPE SUCH AS: CABLES; TUBES; PROFILES AND/OR SIMILAR, WITH TENSOR SUPPORT DRIVEN BY A SINGLE SCREW**

(71) Applicant: Vailati, Giancarlo, 26013 Crema (CR) (IT)
(72) Inventor: Vailati, Giancarlo, 26013 Crema (CR) (IT)

(57) **Abstract**

Collar for products with long and slender shape such as: cables; pipes; profiles and/or similar, with tensor support driven by a single screw.

It is made up of two parts, connected but distinct in their functions.

The tensor support (100), performs the double function of: interface with the fixed wall and/or plate supports (26); and interface, through appropriate references (17), with the product support (200), through the slots (18). Tensioning is carried out by means of the screw (110).

The product support (110) has a shape (15), in section, aimed at elasticity, sturdiness and to obtain a contact with the product through two points of tangency, so as not to damage the surface of the product during any longitudinal movements.

## Description

The present invention has as its object a composite structure that can be made from materials of the following types: ferrous; non-ferrous; thermoplastic, suitable for supporting long-form products such as: cables; tubes; various profiles.

The invention, precisely through its configuration, is characterised by its extreme elasticity in the final conformation, capable of being used in various fields and operating situations. The underlying functional logic and simplicity of operation remains unaltered as the shapes to be supported and the types of fixing to the supports used vary.

The current panorama of products on the market, referring to this product category, is made up of a series of products, some of which are very different from each other both in terms of their operating logic and their shape, which have a characteristic that almost all of them have in common, namely that of linking their operating logic either to the shape of the product to be contained or to the type of fixing to be carried out, and in some cases to both. Simple variants require the addition of other parts, such as interfaces, increasing the cost both in terms of parts and difficulty of use. Some types of these products have lateral appendages to close the product to be supported, which, as well as representing a possible danger to anyone working in the immediate vicinity, in some cases are real spacers that require space that is unnecessarily wasted and often also costly.

The aim of the present invention is to simplify the operations of supporting and fixing the long products, making them extremely simple, while diversifying both the form to be supported and the methods of fixing to the supports, while maintaining the system and the operating logic unchanged.

These simplifications, as well as making operations much easier for workers, with less time wasted, achieve considerable savings in both material costs and construction time, lending themselves to a simple and modular construction line, reducing the need for expensive and complicated production equipment and machinery. The operating logic, combined with the study of the shape, has made it possible to make the invention feasible with simple and easy-to-use equipment, achieving modularity and shape change with simple adaptations, which can be automated, without the need for a continuous change of equipment and machinery, significantly reducing costs. These possibilities allow the realisation of dimensional and shape variants almost in real time with respect to the requests, making the stock of finished products in the storehouse almost useless, thus achieving a considerable saving of money and space.

In relation to the versatility of the invention and in relation to a purely illustrative example in the various fields of application, the possibility of use in the construction sector, as support for downpipes, gas pipes, water pipes or similar, is of course not excluded. With reference to this class of goods, it is well known that, unfortunately, some shapes, in relation to their use, are facilitators for the attackers to climb to the upper floors of houses. In this regard, the shape and constructional combination of the invention makes it possible to calibrate the tensile and torsional strength in appropriate areas, so that the invention is only suitable for its intended purpose and that any additional minimal load causes it to fail in the selected areas, preventing it from being used outside the standards. In any case, if an attempt is made to remedy the fault, it will be extremely easy and inexpensive to replace the part that has failed, both in terms of material and in terms of time and difficulty.

In the following, with the help of the attached tables, only some of the possibilities of execution of the invention are explained, both in the form of the support -200- and in the type of attachment to the fixed supports, such as walls, plates or any other type suitable for the purpose, on the tensor support - 100-. The representations are intended to illustrate the logic of operation, which is independent of the shape of the object to be supported and the type of attachment to be made to the tensor support, so as to make versatility and adaptation as explicit as possible without affecting the principle on which the operation of the invention is based.

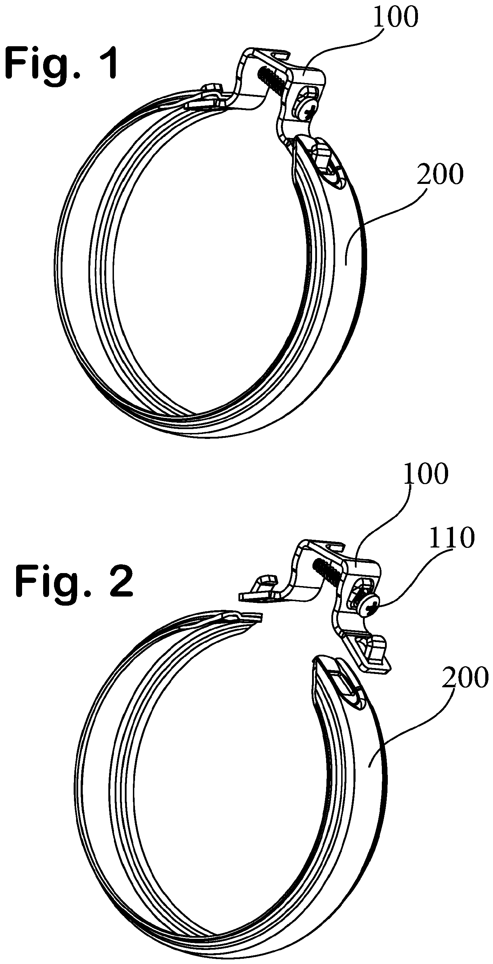

In FIG. 1, we see the assembly in an axonometric view in its constituent parts, -100- and -200-, already prepared for its intended use. In FIG.2 we see the same axonometric view in exploded view with the two parts -100- and -200- detached with the screw -110- for the approach of the two side arms in order to close the part -200- on the product to be supported. These two figures already show the principle underlying the operation of the invention.

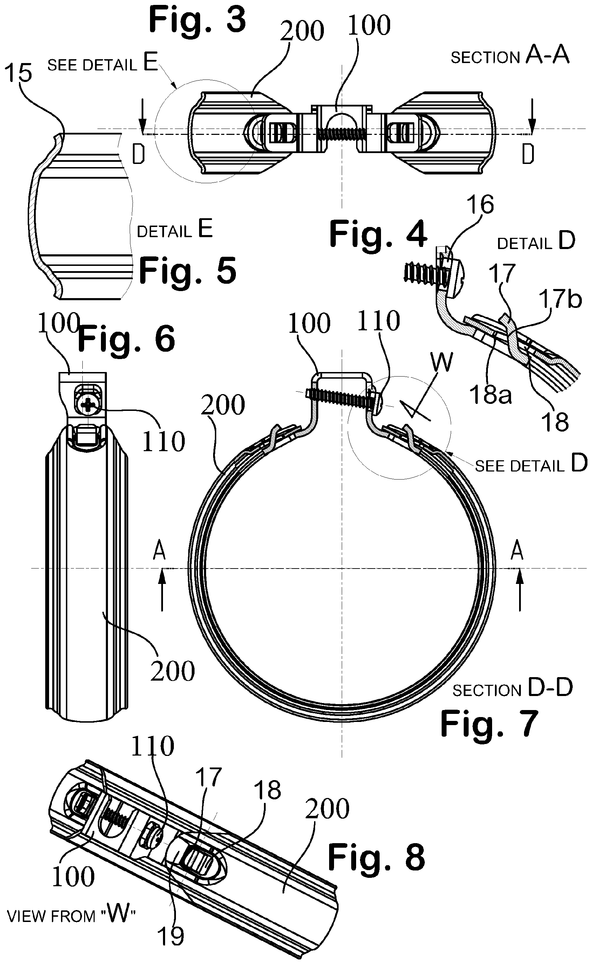

FIG. 3 shows the found in section, in order to highlight the shape (15) which makes the contact with the product to be supported. This shape is the result of the research of elasticity and sturdiness at the same time, in order to assure a continuous and linear contact on very different surfaces.

FIG.5 clearly shows what has just been asserted, in particular pos.15 highlights the shape that is in contact with the perimeter surface of the product to be supported, which is only 2 points on a round section, therefore it is a tangency, aimed at achieving the least possible friction between the two surfaces, favouring, at the same time, the elastic adaptation and the possibility, before clamping, of sliding the component along the longitudinal section of the product without causing damage to the surfaces that may be painted or have aesthetic characteristics.

FIG. 4 shows, as an enlargement of the detail -D- of FIG. 7, the initial and relative position of the two components -100and -200- before carrying out the tensioning and therefore the closure of the part -200- on the perimeter of the product to be supported, which in the figure represents a round shape as a purely illustrative example. FIG. 4 also shows the position of coupling of the part -100- with the part -200-, a coupling which is achieved by means of the slot pos.18 which allows the overhang of the hook pos.17 obtained directly on the part - 100-. The slot pos.18 is made on the lowered section change at the two ends of the part -200-. This change of section is designed to ensure not only perfect adherence of part -200- to the two side arms of part -100-, but also to make contact of the front face of slot pos.18a with the internal surface of hook pos.17b at a point as close as possible to the base of hook pos.17, so that during tensioning the reversing moment acting on hook pos.17 is as low as possible.

In FIG. 7, the partial representation of the section D-D, highlighting the complete assembly, highlights the pretensioning phase, phase in which the invention can be slid longitudinally along the product to be fixed and/or supported, to be positioned in the point where the fixing to the wall, to the plate or to another type of support is carried out, by means of the detail -100-. In FIG.3, detail -100- is shown for a wall, plate and/or other type of support fixing, for a plug-in system, one of the possible systems as we will see later.

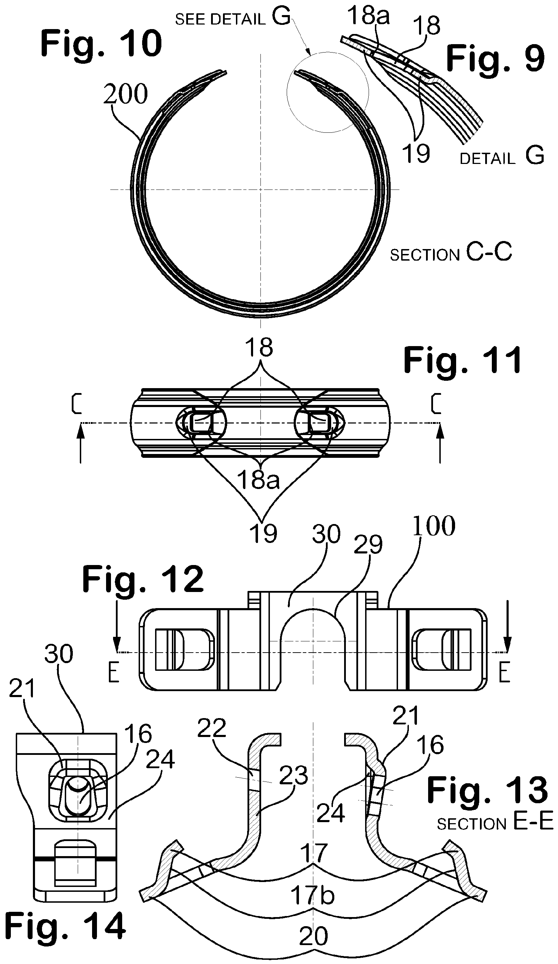

Once the part -100- has been fixed to the support, the screw - 110- can be operated, which, by bringing the walls pos.23-24 in FIG.12 closer to each other, brings the ends in pos.20 - FIG.12 closer, which make contact of the surfaces, pos.17b of the hooks, with the edges pos.18a of the slots, visible both in FIG.8 and in FIG.4, thus achieving a strong and irreversible closure of the part on the product to be supported and/or blocked. As can be seen in FIG.7, the screw -110- is on an inclined plane, describing a certain angle with respect to the fixing wall (30) of the part -100-. This angle is designed to facilitate the screwing manoeuvre by moving the handle of the tool used for the manoeuvre and therefore the operator's hand away from the wall or other type of support if they are too close to the tensioning support -100-.

As can be seen both in FIG.4 and in FIG.13, the head of the screw insists on an inclined plane in pos.21-FIG.13 obtained with a change of section by coining. This plane is designed to adapt and ensure the most continuous contact possible without jamming, between the internal surface of the head of the screw -110- and the extension in pos.24 -FIG.13, as the inclination of the extensions in pos.23 and 24 -FIG.13 changes, and therefore also as the relative angle between the screw -110and the extensions changes during the tensioning phase. In pos.16 -FIG.13 and 14 there is a slot, obtained on the extension of the change of section in pos.21 always in the same figures, not only to engage the screw but also to favour the relative angular movement between the screw -110- and the walls in pos.23-24 of FIG.13. In the graphic, which has been referred to, the shape of the screw shown is purely illustrative, not excluding other types of screw, or even a combination of screw and nut suitable for realising the tensioning function.

As already mentioned, other types of tensioning support -110-will be explained below in relation to the fixing systems and other forms inherent in the particular -200-. This will further emphasise the versatility of the system which, when varying the shapes to be supported or fixed and when varying the type of fixing to the fixed supports, maintains its operating principle unchanged.

In FIG. 6, lateral view of the part and in FIG. 8, view in the direction indicated by -W-, the relative position of the parts - 100- and -200- in relation to the points of engagement and support between them is highlighted. In order to better highlight the salient parts of the functioning of the system, we find in FIG.9-10-11 the detail -200- represented in a circular form, only as one of the possible forms. In FIG. 9, detail of a part of FIG. 10, we can appreciate, explicitly and more clearly, the shape of the change of section, obtained by coining the ends pos.19 of the part -200-, on which is obtained the slot in pos.18 for the realisation of the tensioning.

FIG. 12-13-14 show the particular -100- in the 3 views, one of which in section. The shape on the rear wall (30), at pos.29 of FIG. 12, represents one of the methods by which the tensor - 100-, namely the plug-in one, may be fixed to a particular type of wall support, plate and/or other type of support. FIG. 13 shows the salient points of the part -100- for tensioning the support -200-. In the same figure we can see the hooks in pos.17 obtained directly on the two side arms in pos.20. In this figure we can see that the operation of the device is independent of the inclination and length of the two arms in pos.20, this inclination and length is only a function of the shape of the product to be supported or fixed. Also, in FIG.13 pos.22 it can be seen the punching, for the tensioning screw, inclined according to a determined angle corresponding to the normal of the wall of the section change pos.21 made by coining. This inclination corresponds to the need expressed previously, namely to move the screw operating tool -110- as far away as possible from the wall or fixing plate, thus making it easier for the operator to tighten the screw.

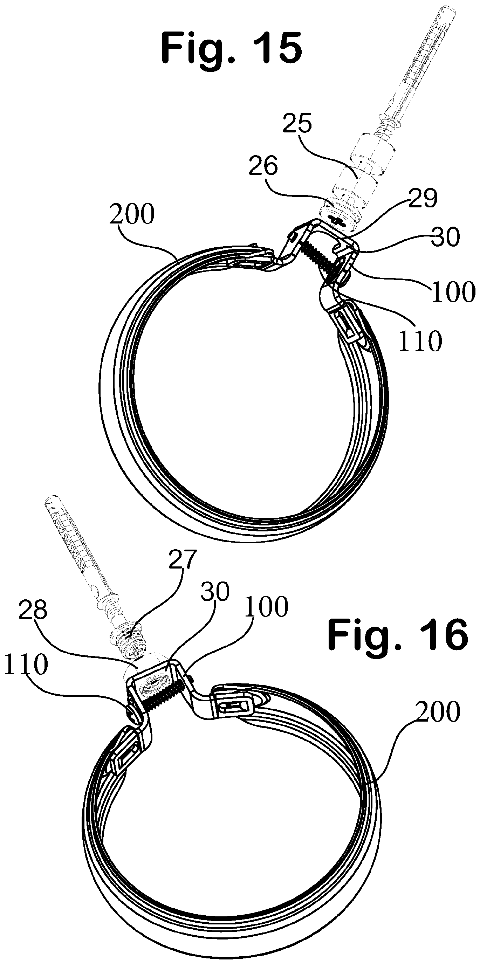

In FIG.15 and 16 we see the representation of some possible types regarding the fixing of the tensor support, to the wall or to other types of support. FIG.15 represents a model suitable for mounting on a specific type of wall fixing represented in pos.-26-, in pos.-25- spacers are represented to make possible the linearity between all the fixing points and therefore also of the product to be supported or fixed. These representations are purely explanatory of certain fixing methods.

FIG. 16 represents a type of tensor support -100- which provides for a fastening by means of a threaded element, pos.-28-, whose geometry may vary according to the requirements of the supports which may be used from time to time. This element can be fixed to the tensor support -100- in a stable and fixed manner, or in such a way that there is a certain freedom of rotation with respect to the support -100-, thus creating possible variants capable of satisfying specific requirements that may arise during the positioning of the invention.

The solution in FIG.15 allows the complete assembly, as shown in the figure, to be already positioned on the product to be supported, which can be brought to the point where part -26-is fixed, engaged on it and tensioned by means of screw -100-. During tensioning, in addition to the approach of the walls pos.23 and 24 -FIG.13-, there is also the deformation of the seat pos.29 -FIG.13- ensuring a stable clamping on the part - 26- FIG.15.

In FIG.16, two types of positioning and clamping can be achieved by means of the tensor support -100-, as shown. In the case of the part -28- made completely integral with the support -100-, the tensioning unit can be completely screwed to the part -27- which is already positioned and permanently fixed. After inserting part -200- directly on the product to be supported or secured, both can be brought in line with the tensioning unit -100- and, taking advantage of the elasticity of part -200-, overlap the two hooks pos.17 -FIG.13- through the special slots pos.18 -FIG.9 and 11, proceeding with tensioning by means of screw -110-.

On the contrary, in the case, always referring to FIG. 16, a fastening of the part -28- on the tensor support -100- is realized, so that the same part -28-, has the possibility to rotate in its seat, a fastening manoeuvre identical to the one just described can be assumed, or, having already positioned the group of the complete invention, part -100- and part -200-, on the product to be supported or secured, bring the whole in correspondence with the part -27-, already firmly positioned, proceed with the jointing by screwing the part -28- onto the part -27- with a suitable tool and proceed with tensioning by means of the screw -110-.

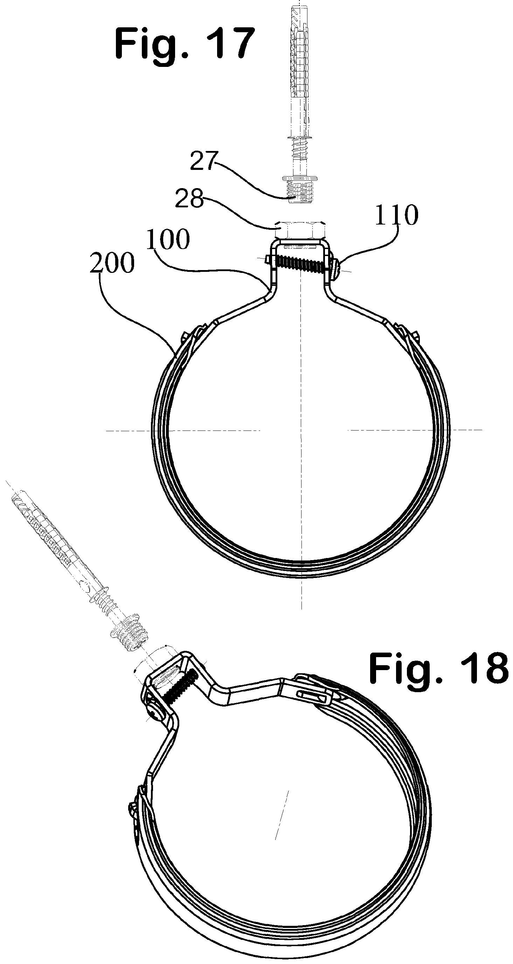

The examples just described, regarding possible systems inherent to the type of fixing or support of products with the invention, have the only purpose of making as explicit as possible only some of the solutions that can be adopted without in any way affecting the basic operating principle of the invention. To this end, FIG. 17 and 18 explore a further possibility in the procedure for fixing the product, without changing the operating principle but simply modifying some dimensions of the parts -100 and 200-. By modifying the length of the side arms, pos.22 FIG.13, of the part -100-, and by decreasing at the same time the development of the part -200-, we may assume an assembly sequence of this kind: by fixing the tensor assembly -100-, in a stable way, in this case to the part -27- FIG.17, previously fixed to its support, the product may be positioned in contact with the tensor support -100- and at the same time, taking advantage of the elasticity of the part -200-, place it in position on the hooks pos.17 FIG.13 through the appropriate slots in pos.18 FIG.9 and 11, then proceed to tension it by means of the screw -110-.

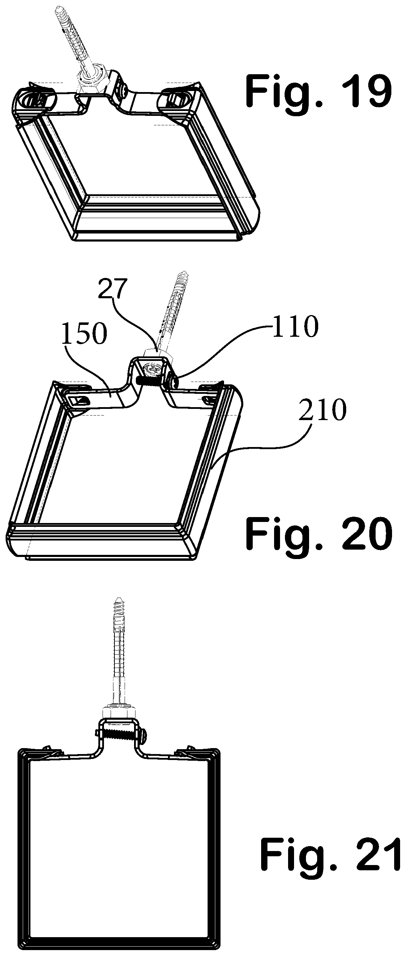

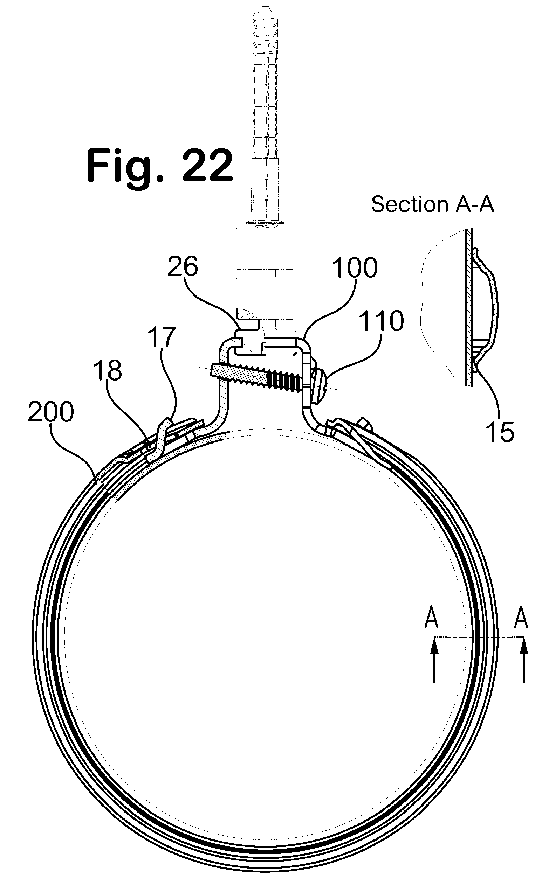

As a final example, for the only purpose of further highlighting the versatility of the invention, please refer to FIG.19-20-21, which are intended to represent a hypothetical quadrangular product. Also, in this case, of course, all the methods of fixing to the fixed support described so far are applicable. In this case it is only a matter of modifying the bending angle of the twoside arms pos.20 FIG.13, as well as the shape of the part -210-and tensioning through the screw -110- exactly as in the other cases described.

The invention, as conceived, is susceptible and lends itself to numerous modifications and variations, all of which fall within the scope of the inventive concept; moreover, all the details are susceptible to adaptation, or replacement with other technically equivalent elements. In practice, the components used as well as the contingent dimensions and shapes can be any according to the needs and state of the art.

Where features and techniques mentioned in any claim are followed by reference marks, such marks have been affixed for the only purpose of increasing the intelligibility of the claims and accordingly such reference marks have no limiting effect on the interpretation of each element identified by way of example by such reference marks.

## Claims

1. Support and fastening collar for long and slender shaped articles such as: cables; tubes; profiles and/or similar, comprising two separate structures (100-200), of which:
a) a support structure with a tensor function (100) equipped with:
a substantially flat portion of the head (30), on which a profile (29) or a seat for housing parts (28) suitable for fixing to walls or fixed support structures (26-27) may be formed;
two side walls (23-24) extending from the head portion (30), on the extensions of which (20), suitably shaped according to the shape of the product to be supported, templates (17) are obtained directly, formed in such a way as to perform both the reference function and the function of retaining and tensioning the product support (200), by means of special slots (18) present on the same;
of a template (21) obtained on a partition (24) extending from the head portion (30), by means of a change of section (21) (coining), on the flat surface of which a slot (16) is obtained for the housing of a screw (110), allowing its engagement in the hole (22) located on the opposite partition (23) extending from the head portion (30), the shape of said template (21) allows and facilitates a continuous sliding of the internal face of the screw (110) without any jamming, along the surface of the template (21), during the relative movement of the faces (23-24), on which the screw (110) insists, both as support of the internal face of the screw head (21) and as engagement hole (22) of the threaded part of the screw, during the tensioning phase of the system;
two templates (17), obtained directly on the extensions (20) of the two faces (23-24) that extend from the head portion (30), whose shape and position guarantee the engagement and retention of the end parts (19), through the appropriate slots (18), of the product support (200);
b) a product support structure (200), the perimeter shape of which is defined and is a function of the perimeter shape of the product to be supported and/or fixed, a shape that defines its total development, provided with:
a contact pattern (15) with the defined product surface to make two-point contact tangentially;
two end surfaces (19), obtained by a change of section (coining), on which slots (18) are made for inserting and positioning the product support (200) on the tensioning support (100) by means of the templates (17) on the same support.

2. Collar according to claim 1, with reference to the support structure with a tensor function (100), on the head portion (30) of which seats with specific shapes (29) can be obtained, depending on the interfaces (26) present on the fixed support structures, on the walls or on reference plates.

3. Collar according to claims 1 and 2, with reference to the support structure having the function of a tensor (100), on the head portion (30) of which there may be a seat for housing parts (28), commercial or otherwise, having the function of an interface to the fixed support brackets, on the walls or on reference plates.

4. Collar according to any of the preceding claims, with reference to the support structure with function of tensor (100), in which, the relative movement of the two faces (23-24), extending from the head portion (30), towards the centre of the support (100), is realised by means of a single screw (110), of any shape and kind, with the possibility of adding a nut, engaged through a slot (16) and a hole (22) on the two faces (23-24), a movement that can be reversed by turning the screw (110) in the opposite direction, should it be necessary to disengage the support (100) from the connections (17).

5. Collar according to any one of the preceding claims, with reference to the support structure having a tensor function (100), wherein the shape and extension of the extensions (20) of the faces (23-24) extending from the head portion (30), are functional to the shape of the product to be supported, while keeping the attachment system (17) to the product support (200) unchanged.

6. Collar according to any one of the previous claims, with reference to the support structure of the product (200), whose perimeter shape and its total development is a function of the perimeter shape of the product to be supported (200-210).

7. Collar according to any one of the previous claims, with reference to the support structure of the product (200), wherein the shape of the inner section (15) achieves specific features such as:
c) a contact, with the faces of the product to be supported, in two points by means of a rounded shape, aimed at obtaining a tangency contact that allows a longitudinal sliding, on the faces of the product to be supported, free and without jamming so as not to affect the integrity of the surfaces that could present aesthetic characteristics;
d) a moment of inertia, relative to the shape of the section (15), capable of supporting large masses with minimum quantities of material, in relation to the need, so as to allow significant material savings.

8. Collar according to any one of the previous claims, with reference to the support structure of the product (200), wherein the end parts of the support have a change of section (19) (coining) whose shape ensures an adequate functional coupling with the surfaces of the extensions (17) of the faces (23-24) of the tensor support (100), ensuring adherence thereto.

9. Collar according to any one of the previous claims, with reference to the support structure of the product (200), wherein on the change of section (19), placed on the end parts of the support same, are obtained slots (18) whose shape and position guarantee the overlapping of the templates (17) obtained on the extensions (20) of the lateral faces (23-24) of the tensor support (100).

10. Collar according to any of the previous claims, with reference to the support structure of the product (200), in which the shape and position of the slots (18), located on the change of section (19) in the end parts of the product support (200), determine: in relation to the type of material; to the thickness of the same and to the general dimensions, the structural tightness of the product support (200), a tightness that can be calibrated according to the mass and therefore to the load, set in the general calculation phase of the system, in compliance with the regulations in force, regarding safety and the use of such systems.
